# EUROPÄISCHE PATENTSCHRIFT

(11) **EP 3 102 508 B1**
(45) Veröffentlichungstag und Bekanntmachung des Hinweises auf die Patenterteilung: **26.06.2019**
(21) Anmeldenummer: 14702877.3
(22) Anmeldetag: 06.02.2014
(51) Int. Cl.: B02C 21/02, B02C 23/36, B65F 1/12, B65F 3/02, B65F 3/14, D21B 1/32, B65F 3/00, D21B 1/34, B65F 9/00

(54) **DATENTRÄGERVERNICHTUNGSVERFAHREN UND SAMMELFAHRZEUG**
METHOD FOR THE DESTRUCTION OF DATA CARRIERS AND COLLECTION VEHICLE
PROCÉDÉ DE DESTRUCTION DE SUPPORTS DE DONNÉES ET VÉHICULE DE COLLECTE

(43) Veröffentlichungstag der Anmeldung: 14.12.2016
(73) Patentinhaber: Rhenus Data Office AG, 4057 Basel (CH)
(72) Erfinder: HUBER, Michael Jörg, CH-8340 Hinwil (CH)
(74) Vertreter: Schneider Feldmann AG Patent- und Markenanwälte
(86) Internationale Anmeldenummer: PCT/EP2014/052329
(87) Internationale Veröffentlichungsnummer: WO 2014/131593

(56) Entgegenhaltungen:
- EP-A1- 1 048 352
- EP-A1- 1 947 236
- WO-A1-03/070606
- DE-A1- 4 141 865

## Beschreibung

### Technisches Gebiet

Die vorliegende Erfindung beschreibt ein Datenträgervernichtungsverfahren zur zugriffsfreien Unlesbarmachung und Vernichtung von vertraulichen Datenträgern aus Papier, wobei vertrauliche Datenträger in einer Anfallstelle in Sicherheitssammelbehältern gesammelt werden, mittels Sammelfahrzeug abgeholt und schlussendlich einer Papierrecyclinganlage zugeführt werden sowie ein Sammelfahrzeug zur Abholung und zum Transport von in Sicherheitssammelbehältern gesammelten vertraulichen Datenträgern aus Papier zur Durchführung eines Datenträgervernichtungsverfahrens.

### Stand der Technik

Obwohl heute viele Informationen auf elektronischem Wege ausgetauscht werden, fallen in Firmen aber auch im privaten Bereich immer noch grosse Mengen vertraulicher Dokumente und Datenträger, in Form von Schriftstücken oder Informationsträgern aus Papier oder ähnlichen Material aus Zell- oder Holzstoff an. Die Frage der diskreten Entsorgung stellt sich in vielen Bereichen, wenn die vertraulichen Datenträger nicht mehr benötigt werden. Eine vor unbefugten Dritten zugriffsgesicherte Entsorgung wurde in den letzten Jahren mittels verschiedener Dokumentvernichtungsverfahren gelöst.

Im einfachsten Fall können vertrauliche Dokumente in den Büros direkt vor Ort durch elektromechanische Schredderanlagen zu Schnitzeln zerkleinert und damit nur schwer rekonstruierbar zerkleinert werden. Es ist bei einem solchen Vorgehen allerdings nicht vollständig zu verhindern, dass Unbefugte an die vertraulichen Dokumente vor dem Schredderprozess gelangen können. Je nach Menge der zu vernichtenden vertraulichen Dokumente sind entsprechend viele Schredderanlagen anzuschaffen, wodurch die Zugriffmöglichkeiten von Dritten auf jede Schredderanlage erweitert werden. Die mit den erhältlichen Schredderanlagen erreichbare Schnitzelgrösse entspricht oft aber nicht der gemäss Vertraulichkeit notwendigen Sicherheitsstufe. Dadurch können Datenträger auch nach dem Schreddern rekonstruiert werden.

Vom Anmelder ist ein Dokumentvernichtungsverfahren aus der EP1476376 bekannt, welches einen Zugriff im gesamten Verlauf verunmöglicht und welches zentralisiert ausgeführt ist. In einem Büro werden an einer zentralen Stelle vertrauliche Dokumente in einem Sicherheitssammelbehälter gesammelt. Durch eine Einwurföffnung werden die vertraulichen Dokumente in den Sicherheitssammelbehälter eingeworfen und können danach dem abgeschlossenen und elektronisch gesicherten Sicherheitssammelbehälter nicht mehr entnommen werden. Da Zugriffsschikanen an der Einwurföffnung des Sicherheitssammelbehälters angeordnet sind und der Öffnungsmechanismus nur mit elektronischen Mitteln öffenbar ist, kann ein ungewünschter Zugriff auf vertrauliche Datenträger ausgeschlossen werden. Der Sicherheitssammelbehälter ist Teil eines Entsorgungssystems, in welchem gefüllte Sicherheitssammelbehälter abgeholt und mit leeren Sicherheitssammelbehältern ausgetauscht werden. Die Sicherheitssammelbehälter werden vor Ort beim Kunden in einen Container eines Sammelfahrzeuges ebenfalls gesichert entleert, wobei der Container den Öffnungsmechanismus des Sicherheitssammelbehälters derart elektronisch öffnen kann, dass auch beim Umfüllen der vertraulichen Dokumente ein Zugriff durch Dritte unterbunden ist. Es sind Mittel vorgesehen, um den Transport und jede Öffnung des Sicherheitssammelbehälters lückenlos zu überwachen, sodass die Zugriffsfreiheit protokolliert wird.

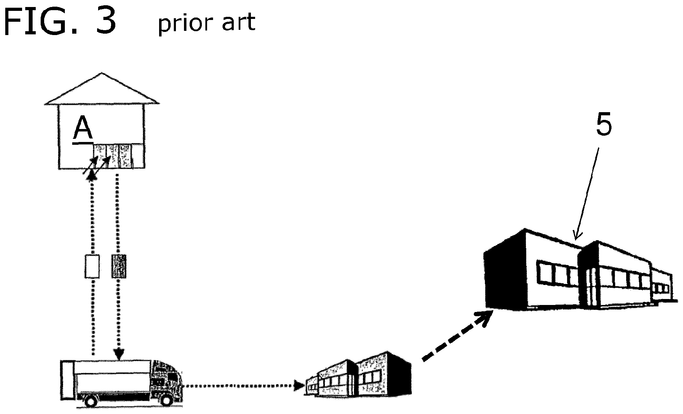

Natürlich erlaubt auch der Container des Sammelfahrzeuges keinen Zugriff in seinen Innenraum, sodass eine vollständige Sicherung der vertraulichen Dokumente vor unberechtigtem Zugriff während des gesamten Vernichtungsprozesses gewährleistet ist. Mittels Sammelfahrzeug werden die gesammelten vertraulichen Dokumente zu einer zentralen Entsorgungsanlage, üblicherweise einer zertifizierten Schredderanlage transportiert, wo diese nach einer möglichst hohen Sicherheitsstufe derart zerkleinert werden, dass die resultierenden Schnitzel für das Papierrecycling geeignet sind. Auch beim Ausstossen der gesammelten Dokumente aus dem Container des Sammelfahrzeuges in die Schredderanlage hat niemand Zugriff auf die zu schreddernden vertraulichen Dokumente. Auch beim Ausstossen der zu vernichtenden Dokumente findet eine Überwachung statt, wodurch auch hier die Fremdzugriffsfreiheit bestätigt werden kann. Nach der Behandlung in der Schredderanlage werden die Schnitzel zu einer Papierrecyclinganlage befördert und können dort weiterverwendet werden. Dieser Prozess ist in Figur 3 schematisch dargestellt. Da die gesammelten vertraulichen Dokumente nach Abholung bei einer Anfallstelle A erst in einer zertifizierten Schredderanlage 5 vernichtet werden, besteht die Möglichkeit, dass beispielsweise bei einem Unfall des Sammelfahrzeuges auf dem Weg dorthin, vertrauliche Dokumente verloren gehen.

Jetzt ist es möglich die Sammelfahrzeuge mit Schredderanlagen auszurüsten, wodurch ein sogenanntes "mobile shredding" durchführbar ist. Ein solches System ist beispielsweise aus der WO0170406 bekannt. Damit könnten die in Sicherheitssammelbehältern gesammelten vertraulichen noch lesbaren Datenträger vor Ort, nach gesicherter Übergabe in den Container auf dem Sammelfahrzeug geschreddert und gemäss einer definierten Sicherheitsstufe zerkleinert werden, wobei ein Fremdzugriff ebenfalls unterbindbar ist. Das Schreddern vor Ort hat aber einige Nachteile.

Damit die auftretenden unterschiedlich dicken Papierarten und vertraulichen Dokumente, die in unterschiedlichsten Formaten vorkommen, zerkleinert und gemäss einer mittleren Sicherheitsstufe geschreddert werden können, sind besonders leistungsfähige Schneidwerke einzusetzen. Soll das Zerkleinern im Kreuz- bzw. Partikelschnitt erfolgen, so weisen derartige Schredderapparaturen bekanntermassen hohe Betriebsgeräusche auf. Die verwendeten Schneidwerke sind komplex und sind mit ausreichend Energie zu versorgen, damit eine reibungslose Zerkleinerung komplett gefüllter Sicherheitssammelbehälter durchführbar ist. Dazu muss die Schredderapparatur bei laufendem Motor des Sammelfahrzeuges für einen längeren Zeitraum betrieben werden. In der Praxis reicht die Leistungsfähigkeit der Schredderapparaturen nicht aus, um die zugeführte Menge vertraulicher Datenträger in kurzer Zeit und gemäss hoher Sicherheitsstufe zu zerkleinern. Aufgrund des hohen Eigengewichtes und Volumens der Schredderappartur kann die zuladbare Menge vertraulicher Datenträger kaum kommerziell erfolgreich zerkleinert werden. Aus Sicherheitsgründen und um die erzeugten Schnitzel dem Papierrecycling zuführen zu können, müssen die mobil geschredderten vertraulichen Datenträger zu einer zertrifizierten Schredderanlage befördert und dort nochmals nachgeschreddert werden, bevor sie zur Weiterverwendung in eine Papierrecyclinganlage befördert werden können.

### Darstellung der Erfindung

Die vorliegende Erfindung hat sich zur Aufgabe gestellt ein Datenträgervernichtungsverfahren zu schaffen, welches den Zugang zu vertraulichen Dokumenten aus Papier unterbindet und bereits während der Sammlung der Dokumente einen Vernichtungsschritt anschliesst, wobei die mögliche Zuführung der vernichteten Dokumente zum Papierrecycling gewährleistet bleibt und auf die zusätzliche Behandlung in einer Schredderanlage verzichtet wird.

Das Datenträgervernichtungsverfahren nutzt dazu nur einen geringfügig gesteigerten apparativen Aufwand im Vergleich zu Entsorgungssystemen gemäss Stand der Technik.
Eine weitere Aufgabe des vorliegenden Datenträgervernichtungsverfahrens ist die Durchführung eines Aufbereitungsschrittes vor Ort an einer Anfallstelle und/oder während des Transportes der gesammelten Dokumente von der Anfallstelle zu einer Papierrecyclinganlage, wobei der Zugang zu den gesammelten vertraulichen Dokumente zu jeder Zeit verunmöglicht ist.
Eine weitere Aufgabe der Erfindung ist die Schaffung eines Sammelfahrzeuges zur mobilen Durchführung eines Datenträgervernichtungsverfahrens.

Die durch das erfindungsgemässe Verfahren erreichbaren Vorteile sind neben der Vernichtung mit einer höchstmöglichen Sicherheitsstufe, wobei ein absolutes Verunmöglichen der Rekonstruierbarkeit der vertraulichen Datenträger erreichbar ist, zusätzlich der bessere Erhalt der Länge der Papierfasern durch das Zerreissen anstelle des Schneidens beim Shreddern.

Der Umweg der eingesammelten vertraulichen Datenträger über eine zertifizierte Schredderanlage schlussendlich in eine Papierrecyclinganlage kann vermieden werden. Die Gesamtinvestitionen können im Vergleich zu mobilen Schredderanlagen deutlich verringert werden und auch der Energieaufwand vor Ort für die Vernichtung der Datenträger ist gemäss erfindungsgemässem Verfahren wesentlich geringer, als bei bekanntem mobile-shredding-Verfahren.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine schematische Ansicht des Datenträgervernichtungsverfahrens von der Anfallstelle, die Umfüllung der vertraulichen Datenträger und der Transport bis zur Ablieferung in einer Papierrecyclinganlage.
- Figur 2: zeigt eine perspektivische Ansicht einer Ausführungsform eines Sammelfahrzeugs zur Abholung, zum Transport und zur Vernichtung von vertraulichen Datenträgern.
- Figur 3: zeigt eine schematische Ansicht des Ablaufs eines Datenträgervernichtungsverfahrens gemäss Stand der Technik, wobei gesammelte vertrauliche Datenträger mit und ohne mobiles Schreddern via einer zertifizierten Schredderanlage an eine Papierrecyclinganlage geliefert werden.

### Beschreibung

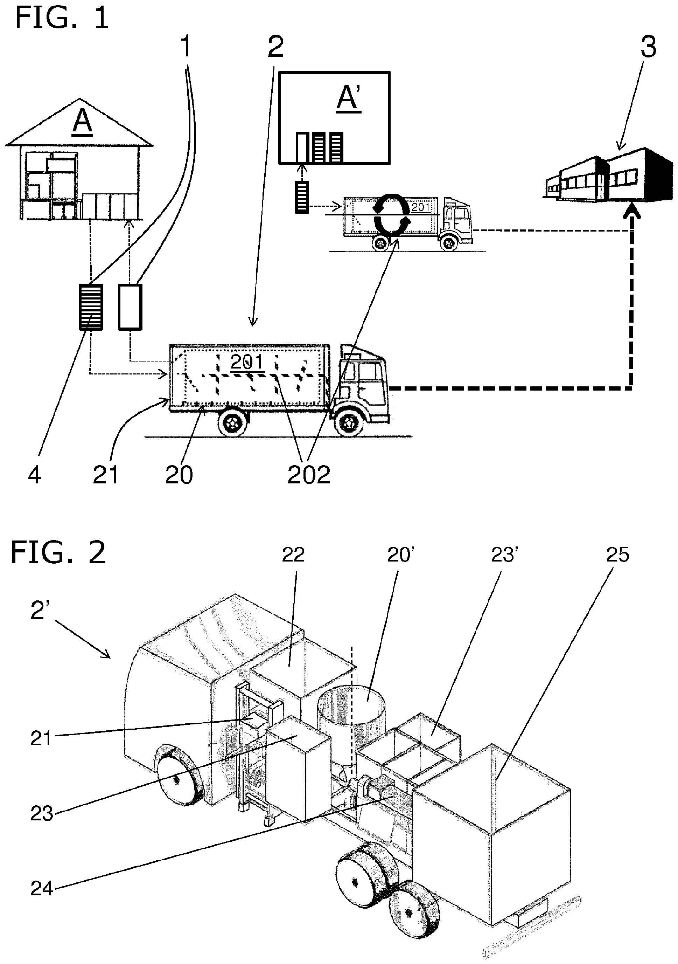

In Figur 1 ist das erfindungsgemässe Datenträgervernichtungsverfahren zur Vernichtung bzw. Unlesbarmachung vertraulicher, personenbezogener und/oder sensibler Dokumente und Datenträger 4, in Form von Schriftstücken oder Informationsträgern aus Papier oder ähnlichen Material aus Zell- oder Holzstoff, schematisch dargestellt.

In einer Anfallstelle A werden zu vernichtende vertrauliche Datenträger 4 in abgeschlossenen Sicherheitssammelbehältern 1 gesammelt. Nach der Eingabe der vertraulichen Datenträger 4 in den Sicherheitssammelbehälter 1 können Dritte nicht an die Datenträger 4 gelangen. Die mit gesammelten Dokumenten und Datenträgern 4 gefüllten Sicherheitssammelbehälter 1 werden in ein Sammelfahrzeug 2 umgefüllt, wobei entleerte Sicherheitssammelbehälter 1 wieder zurück an die Anfallstelle A gegeben werden.

Auf dem Sammelfahrzeug befindet sich eine Auflösevorrichtung 20, auch Pulper 20 genannt, welche einen Trog mit einem Innenraum 201 aufweist. Die Auflösevorrichtung 20 ist mit einer Beladungsvorrichtung 21 gekoppelt, mittels welcher der Inhalt der Sicherheitssammelbehälter 1 in den Innenraum 201 der Auflösevorrichtung 20 gesichert und unzugänglich für Unbefugte umfüllbar ist. Die Beladungsvorrichtung 21 kann als Lift oder Hebe-Drehkipper ausgestaltet sein, welcher die Sicherheitssammelbehälter 1 vertikal relativ zur Auflösevorrichtung 20 anhebt. Ein solcher Lift kann mit der Auflösevorrichtung 20 und damit mit dem Sammelfahrzeug 2 mitgeführt werden.

Es ist eine Umwälzvorrichtung 202 vorgesehen, welche die im Innenraum 201 befindliche Masse eingefüllter vertraulicher Datenträger 4 umwälzt. In der Figur 1 ist die Umwälzvorrichtung 202 als Rührwerk ausgebildet und im Innenraum 201 angeordnet.

In den Innenraum 201 wird ein Auflösefluid, in der Regel reines Wasser eingefüllt, welches mit den Datenträgern 4 vermischt wird. Im Innenraum 201 werden die vertraulichen Dokumente 4 in eine Suspension überführt, welcher je nach Mischungsverhältnis Auflösefluid zu Menge Dokumente eine schlammartige Konsistenz aufweist. Das Auflösefluid kann wahlweise zerfaserungsverstärkende Chemikalien enthalten. Durch die Umwälzvorrichtung 202 findet eine mechanische Zerfaserung der vertraulichen Datenträger 4 in der Auflösevorrichtung 20 statt, wobei durch Zugabe des Auflösefluids eine hydromechanische Zerfaserung im Innenraum 201 der Auflösevorrichtung 20 stattfindet.

Durch die Umwälzung der eingefüllten Datenträger 4 unter Einwirkung des Auflösefluids sind die vertraulichen Datenträger 4 in einigen Minuten unlesbar und bereits in Fasern zerteilt. Bei dieser Zerfaserung werden die vertraulichen Dokumente 4 gezielt unlesbar gemacht und damit vernichtet, wobei die resultierende Faserlänge wesentlich grösser bleibt, als nach dem Durchlauf durch einen Schredderprozess. Durch die Behandlung im Innenraum 201 der Auflösevorrichtung 20 wird eine Vernichtung der Datenträger 4 gemäss Sicherheitsstufe sieben mit dem beschriebenen Verfahren ermöglicht, sodass gemäss DIN-Norm 66399 die Reproduktion der auf den vertraulichen Datenträgern 4 befindlichen Daten nach dem Stand von Wissenschaft und Technik unmöglich ist.

Die Auflösung bzw. Zerfaserung der vertraulichen Dokumente 4 in der Auflösevorrichtung 20 stellt die Unlesbarmachung der Daten und gleichzeitig einen Wiederaufbereitungsschritt des Papiers dar, welche direkt nach Einfüllung in die Auflösevorrichtung 20 stattfinden. Der Auflöseprozess findet durch die Eigenreibung und Zerreissen an der Umwälzvorrichtung 202 der vertraulichen Dokumente 4 mit dem Auflösefluid innerhalb weniger Minuten statt. Die dadurch erreichbare Vernichtung der vertraulichen Dokumente 4 findet sofort nach Einfüllung in den Innenraum 201 der Auflösevorrichtung 20 statt, wobei nur ein geringer Energieaufwand für die einmalige Beladung und die mindestens kurzzeitig durchgeführte Umwälzung aufgewendet werden muss. Entsprechend kann der Auflöseprozess auch bei bewegtem Sammelfahrzeug 2 weiterhin ablaufen. Auch wenn die Umwälzvorrichtung 202 ausgeschaltet wird, wird die entstehende Suspension aus zerfaserten Dokumenten und Auflösefluid während der Fahrt bewegt, wodurch eine andauernde mobile Zerfaserung erreicht wird.

Das Sammelfahrzeug 2 transportiert die Suspension aus zerfaserten Dokumenten und Auflösefluid in eine Papierrecyclinganlage 3, in welcher die vernichteten Dokumente zur Papierherstellung wiederverwendet werden können. Mittels mobiler Auflösung der vertraulichen Dokumente 4 kann ein Transport zu einer zertifizierten Schredderanlage eingespart werden. Die gesammelten vertraulichen Dokumente 4 liegen gemäss einer hohen Sicherheitsstufe vernichtet und bereits in einer wiederverwertbaren Form vor.

Selbst wenn es auf dem Transportweg des Sammelfahrzeuges 2 zur Papierrecyclinganlage 3 zu einer ungewünschten Öffnung des Innenraums 201 und zum Austritt der Suspension kommen sollte, sind die vertraulichen Dokumente 4 unlesbar und damit vernichtet.

Die Auflösevorrichtung 20 kann auf der Ladefläche des Sammelfahrzeuges 2 fest installiert sein, oder auf einem Anhänger mit dem Sammelfahrzeug 2 gekoppelt mitgeführt werden. Die Auflösevorrichtung 20 kann rotierbar um eine Längsachse angeordnet sein, sodass die Umwälzvorrichtung 202 entsprechend als um die Längsachse rotierbare Auflösevorrichtung 20 ausgebildet ist. In einer weiteren Ausführungsform kann die Umwälzvorrichtung als im Innenraum 201 installierter Rotor ausgebildet sein. Alle möglichen Umwälzvorrichtungen 202 benötigen entsprechend einen Umwälzvorrichtungsantrieb, welcher das Umwälzen der Suspension im Innenraum 201 antreibt. Dieser Umwälzvorrichtungsantrieb ist sinnvollerweise mit dem Antrieb des Sammelfahrzeuges 2 verbunden.

In einer weiteren Ausführungsform kann der Innenraum 201 der Auflösevorrichtung 20 vor Antritt der Sammeltour des Sammelfahrzeuges 2 mit einer konstanten Menge Auflösefluid gefüllt sein, wobei zugeladene Datenträger 4 einfach zur bereits bestehenden Suspension bzw. zur Menge Auflösefluid zugeführt werden.

Um einen Zugriff Unbefugter auf die vertraulichen Datenträger 4 zu verhindern, können Sicherheitssammelbehälter 1 verwendet, wie sie bereits in der EP1476376 des Anmelders beschrieben sind. Dabei sind die Sicherheitssammelbehälter 1 vollständig geschlossen und weisen einen Einwurfschlitz auf, welcher durch im Innenraum des Sicherheitssammelbehälters 1 angeordnete Schikanen verhindert, dass vertrauliche Datenträger 4 entnommen werden können. Eine Auswurfklappe ist mit einem elektromechanischem Verschluss versehen. Dieser elektromechanische Verschluss kann von einer geeigneten Elektronik geöffnet werden, mittels welcher die Auswurfklappe geöffnet und die vertraulichen Datenträger 4 direkt in die Auflösevorrichtung 20 umgefüllt werden können. Besonders vorteilhaft ist, wenn die Auswurfklappe des Sicherheitssammelbehälters 1 mit der Einfüllöffnung der Auflösevorrichtung 20 wirkverbindbar ist, sodass eine Umfüllung mit garantierter Zugriffsfreiheit erreichbar ist.

Es sind zusätzliche Mittel vorgesehen, die den Transportweg des Sicherheitssammelbehälters 1, beispielsweise per GPS-Ortung und jede Öffnung der Auswurfklappe mitprotokollieren. Damit kann die Bewegung des Sicherheitssammelbehälters 1 lückenlos aufgezeichnet werden und belegt werden, dass keine ungewünschte Öffnung durch Unbefugte stattgefunden hat.

Das Sammelfahrzeug 2 kann als Kipper ausgeführt sein, wodurch, bei darauf befestigter Auflösevorrichtung 20 eine vereinfachte Entleerung des Inhalts aus dem Innenraum 201 in die Papierrecyclinganlage 3 ermöglicht ist.

Das Sammelfahrzeug 2 kann aber auch derart ausgeführt sein, dass die Auflösevorrichtung 20 auf einem Anhänger befestigt ist, der vom Sammelfahrzeug 2 mitgeführt ist. Auch dabei kann die Auflösevorrichtung 20 kippbar befestigt ausgeführt sein.

Der Inhalt der Auflösevorrichtung 20 kann auch mit geeigneten Pumpmitteln aus dem Innenraum 201 nach dem Auflösevorgang entnommen werden, vor allem, wenn die Auflösevorrichtung 20 ortsfest am Sammelfahrzeug 2 befestigt ist. Die Pumpmittel können dabei entweder mit dem Sammelfahrzeug 2 und/oder dem Anhänger fest verbunden und mitführbar ausgeführt sein, oder die Pumpmittel sind bei der Papierrecyclinganlage 3 installiert.

Versuche haben gezeigt, dass ein Massenanteil des Auflösefluids von bereits mindestens 20% zur Masse der Suspension zu guten Vernichtungsergebnissen führt. Eher bevorzugt ist aber die Verwendung von 85% bis 98% Auflösefluid zu 15% bis 2% Feststoff bzw. Datenträgermenge, bei Verwendung einer Auflösevorrichtung 20. Um das Auflösefluid gezielt zur Menge eingegebener Datenträger 4 zuzusetzen, ist eine Dosiervorrichtung vorgesehen. Die Masse zugeladener Datenträger 4 wird durch eine Wägeeinrichtung der Beladungsvorrichtung 21 bestimmt und darauf abgestimmt wird die gewünschte Menge Auflösefluid mittels Dosiervorrichtung zugesetzt.

Wie eine Ausführungsform eines Sammelfahrzeuges 2' aussehen kann, wird im Folgenden anhand Figur 2 beschrieben. Das Sammelfahrzeug 2' weist eine Beladungsvorrichtung 21 auf, mit welcher zu vernichtende vertrauliche Datenträger 4 in einen Einfüllraum 22 aus einem Sicherheitssammelbehälter 1 einfüllbar sind. Vom Einfüllraum 22 werden die trockenen vertraulichen Datenträger 4 in die Auflösevorrichtung 20' transportiert, welche hier als vertikal stehende Auflösevorrichtung 20' ausgeführt ist, wobei die Längsachse bzw. Rotationsachse der Auflösevorrichtung 20' senkrecht zur Längsachse des Sammelfahrzeuges 2' ausgerichtet ist. Aus einem mitgeführten Wassertank 23 kann Wasser als Auflösefluid mittels Pumpmitteln in die Auflösevorrichtung 20' gesteuert eingepumpt werden. Die hier verwendete aber nicht sichtbare Umwälzvorrichtung kann mit bis zu 1500 Umdrehungen pro Minute betrieben werden, wobei die Datenträger 4 innerhalb des Auflösefluids bereits nach wenigen Minuten unlesbar vernichtet sind.

Durch weitere Pumpmittel kann die Suspension, umfassend 2% bis 15% Feststoff in Form zerfaserter vertraulicher Dokumente, in eine Entwässerungsvorrichtung 24 transportiert werden, in welcher Auflösefluid aus der Suspension abgeschieden wird, sodass ein Mischungsverhältnis Feststoff/Wasser von etwa eins zu eins resultiert. Hier verwendet wird eine Trocknungsschnecke 24, welche als Entwässerungsvorrichtung 24 dient. Das abgeschiedene Auflösefluid wird entweder dem Wassertank 23, einem Ersatztank 23' oder direkt der Auflösevorrichtung 20' erneut zugeführt. Aus der Entwässerungsvorrichtung 24 kann entwässerte Suspension, welche eine wesentlich höhere Dichte als die Suspension innerhalb der Auflösevorrichtung 20' aufweist in einen Lagertank 25 gepumpt werden. Die entwässerte Suspension weist eine schlammartige Form bis zur Konsistenz einer feuchten Papiermasse auf und wird während des Transportes durch das Sammelfahrzeug 2' in diesem Lagertank 25 gelagert.

Da die vernichteten Datenträger in der Suspension unlesbar sind, kann das Sammelfahrzeug 2' die Suspension aus dem Lagertank 25 zur Papierrecyclinganlage 3 transportieren und dort dem Recycling zuführen. Es ist aber auch möglich die Suspension vorab einfach beispielsweise am Ort des Betreibers des Sammelfahrzeuges 2' zwischenzulagern, da die Datenträger nicht mehr lesbar sind. Damit können die Fahrten des Sammelfahrzeuges 2' zur Papierrecyclinganlage 3 auf ein Minimum reduziert werden.

### Bezugszeichenliste

- 1: Sicherheitssammelbehälter
- 2, 2': Sammelfahrzeug
20, 20' Auflösevorrichtung
201 Innenraum
202 Umwälzvorrichtung
21 Beladungsvorrichtung
22 Einfüllraum
23 Wassertank
23' Ersatztank
24 Entwässerungsvorrichtung
25 Lagertank
- 3: Papierrecyclinganlage

- 4: vertrauliche Datenträger
- A: Anfallstelle
- 5: Shredderanlage

## Patentansprüche

1. Datenträgervernichtungsverfahren zur zugriffsfreien Unlesbarmachung und Vernichtung von vertraulichen Datenträgern (4) aus Papier, wobei
vertrauliche Datenträger (4) in einer Anfallstelle (A) in Sicherheitssammelbehältern (1) gesammelt werden,
mittels Sammelfahrzeug (2) abgeholt
und
schlussendlich einer Papierrecyclinganlage (3) zugeführt werden, **dadurch gekennzeichnet, dass**
die vertraulichen Datenträger (4) nach Sammlung in Sicherheitssammelbehältern (1) über eine Beladungsvorrichtung (21), welche mit einer mobilen Auflösevorrichtung (20) gekoppelt ist, gesichert und unzugänglich für Unbefugte in den Innenraum (201) der mobilen Auflösevorrichtung (20), welche mit dem Sammelfahrzeug (2) verbunden ist,
eingefüllt werden,
die vertraulichen Datenträger (4) dort mit einem Auflösefluid vermischt werden
und
das Gemisch durch eine Umwälzvorrichtung (202) zu einer Suspension aus zerfaserten Dokumenten und Auflösefluid vermischt wird,
wobei in der mobilen Auflösevorrichtung (20) ein hydromechanischer Auflöseprozess stattfindet,
bevor die Suspension der Papierrecyclinganlage (3) zugeführt wird.

2. Datenträgervernichtungsverfahren gemäss Anspruch 1, wobei die Umwälzvorrichtung (202) als im Innenraum (201) der Auflösevorrichtung (20) installiertes Rührwerk ausgebildet ist.

3. Datenträgervernichtungsverfahren gemäss einem der Ansprüche 1 bis 2, wobei die Umwälzvorrichtung (202) mittels eines Umwälzvorrichtungsantriebs angetrieben wird, welcher mit dem Antrieb des Sammelfahrzeuges (2) gekoppelt ist.

4. Datenträgervernichtungsverfahren gemäss einem der vorhergehenden Ansprüche, wobei die Suspension ein Massenverhältnis Auflösefluid zu Datenträger (4) zwischen 85/15 bis 98/2 in der Auflösevorrichtung (20) aufweist.

5. Datenträgervernichtungsverfahren gemäss einem der vorhergehenden Ansprüche, wobei die Auflösevorrichtung (20) auf der Ladefläche des Sammelfahrzeuges (2) installiert ist.

6. Datenträgervernichtungsverfahren gemäss einem der Ansprüche 1 bis 5, wobei die Auflösevorrichtung (20) auf einem Anhänger mit dem Sammelfahrzeug (2) gekoppelt mitgeführt wird.

7. Datenträgervernichtungsverfahren gemäss einem der vorhergehenden Ansprüche, wobei der Zugriff auf die im Sicherheitsbehälter (1) gesammelten vertraulichen Datenträger (4) durch einen elektromechanisch betriebenen Schliessmechanismus unterbunden ist.

8. Datenträgervernichtungsverfahren gemäss Anspruch 1, wobei der Masse eingefüllter vertraulicher Datenträger (4), gemessen durch eine Wägeeinrichtung gesteuert eine Masse des Auflösefluids mit einer Dosierungsvorrichtung zugesetzt wird, wobei die Masse des Auflösefluids mindestens ein Fünftel der Masse der Datenträger (4) entspricht.

9. Datenträgervernichtungsverfahren gemäss Anspruch 1, wobei nach der Datenträgervernichtung die Dichte der Suspension durch Verarbeitung in einer Entwässerungsvorrichtung (24) gesteigert wird und die entwässerte Suspension anschliessend in einen Lagertank (25) gepumpt wird.

10. Sammelfahrzeug (2) zur Abholung und zum Transport von in Sicherheitssammelbehältern (1) gesammelten vertraulichen Datenträgern (4) aus Papier zur Durchführung eines Datenträgervernichtungsverfahrens,
**dadurch gekennzeichnet, dass**
das Sammelfahrzeug (2) eine Auflösevorrichtung (20) mobil mitführt, in deren Innenraum (201) durch Vermischung der Datenträger (4) mit einem Auflösefluid unter Einsatz einer Umwälzvorrichtung (202) eine Suspension aus zerfaserten Dokumenten und Auflösefluid durch einen hydromechanischen Auflöseprozess erreicht wird, bevor die Suspension einer Papierrecyclinganlage (3) zuführbar ist,
wobei
die Auflösevorrichtung (20) mit einer Beladungsvorrichtung (21) wirkverbunden ist, mittels welcher die vertraulichen Dokumente (4) aus dem Sicherheitsbehälter (1) in den Innenraum (201) einbringbar sind.

11. Sammelfahrzeug nach Anspruch 10, wobei
die Umwälzvorrichtung (202) in Form eines Rührwerkes, eines Rotors oder durch Eigenrotation der Auflösevorrichtung (20) um eine Längsachse ausgebildet ist.

12. Sammelfahrzeug nach Anspruch 10, wobei
die Auflösevorrichtung (20) mit einer Dosiervorrichtung gekoppelt ist, sodass eine definierte Menge Auflösefluid dem Innenraum (201) zusetzbar ist.

13. Sammelfahrzeug nach Anspruch 10, wobei die Beladungsvorrichtung (21) mit einer Auswurfklappe des Sicherheitssammelbehälters (1) wirkverbindbar ist, sodass der Inhalt des Sicherheitssammelbehälters (1) zugriffsfrei in den Innenraum (201) der Auflösevorrichtung (20) abgebbar ist.

14. Sammelfahrzeug nach Anspruch 10, wobei die Auflösevorrichtung (20) mit einer Entwässerungsvorrichtung (24) gekoppelt ist, in welcher Auflösefluid aus der Suspension abgeschieden wird, wodurch die Dichte der Suspension gesteigert werden kann.

15. Sammelfahrzeug nach einem der Ansprüche 10 bis 14, wobei die Auflösevorrichtung (20) auf einer Ladefläche des Sammelfahrzeuges (2) installiert ist, oder Sammelfahrzeug nach einem der Ansprüche 10 bis 14 mit einem Anhänger, wobei die Auflösevorrichtung (20) auf dem Anhänger mit dem Sammelfahrzeug (2) gekoppelt mitgeführt wird.

## Claims

1. A data carrier destruction method for the access-free rendering unreadable and destruction of confidential data carriers (4) made from paper, confidential data carriers (4) being collected at a collection point (A) in secure collection containers (1) and being picked up by means of a collection vehicle (2) and ultimately supplied to a paper recycling plant (3),
**characterized in that**
the confidential data carriers (4), after collection in secure collection containers (1), are loaded by means of a loading device (21), which is coupled to a mobile dissolving device (20), into the interior (201) of the mobile dissolving device (20), which is connected to the collection vehicle (2), in a manner which is secure and inaccessible for unauthorized persons,
the confidential data carriers (4) are mixed with a dissolving fluid there and
the mixture is mixed by means of a circulating device (202) to form a suspension made from shredded documents and dissolving fluid,
wherein a hydromechanical dissolving process takes place in the mobile dissolving device (20)
before the suspension is supplied to the paper recycling plant (3).

2. The data carrier destruction method according to claim 1, wherein the circulating device (202) is constructed as a stirring device installed in the interior (201) of the dissolving device (20).

3. The data carrier destruction method according to one of claims 1 to 2, wherein the circulating device (202) is driven by means of a circulating-device drive which is coupled to the drive of the collection vehicle (2).

4. The data carrier destruction method according to one of the preceding claims, wherein the suspension has a mass ratio of dissolving fluid to data carrier (4) of between 85/15 to 98/2 in the dissolving device (20).

5. The data carrier destruction method according to one of the preceding claims, wherein the dissolving device (20) is installed on the loading area of the collection vehicle (2).

6. The data carrier destruction method according to one of claims 1 to 5, wherein the dissolving device (20) is entrained on a trailer, coupled to the collection vehicle (2).

7. The data carrier destruction method according to one of the preceding claims, wherein the access to the confidential data carriers (4) collected in the secure container (1) is suppressed by means of an electromechanically operated closing mechanism.

8. The data carrier destruction method according to claim 1, wherein a mass of the dissolving fluid is added in a controlled manner by means of a dosing device to the mass of loaded confidential data carriers (4), measured by a weighing apparatus, wherein the mass of the dissolving fluid corresponds to at least a fifth of the mass of the data carriers (4).

9. The data carrier destruction method according to claim 1, wherein after the data carrier destruction, the density of the suspension is increased by processing in a water-drainage device (24) and the suspension, which has been drained of water, is subsequently pumped into a storage tank (25).

10. A collection vehicle (2) for picking up and for transporting confidential data carriers (4) made from paper collected in secure collection containers (1) for carrying out a data carrier destruction method,
**characterized in that**
the collection vehicle (2) entrains a dissolving device (20) in a mobile manner, in it's interior (201) of which a suspension made up of shredded documents and dissolving fluid is achieved by means of a hydromechanical dissolving process by mixing the data carriers (4) with a dissolving fluid using a circulating device (202), before the suspension can be supplied to a paper recycling plant (3),
wherein the dissolving device (20) is operatively connected to a loading device (21), by means of which the confidential documents (4) can be introduced from the secure container (1) into the interior (201) in an access-free manner.

11. The collection vehicle according to claim 10, wherein the circulating device (202) is build in the form of a stirring device, a rotor or by means of natural rotation of the dissolving device (20) about a longitudinal axis.

12. The collection vehicle according to claim 10, wherein the dissolving device (20) is coupled to a dosing device, so that a defined quantity of dissolving fluid can be added to the interior (201).

13. The collection vehicle according to claim 10, wherein the loading device (21) can be operatively connected to a discharge flap of the secure collection container (1), so that the content of the secure collection container (1) can be discharged in an access-free manner into the interior (201) of the dissolving device (20).

14. The collection vehicle according to claim 10, wherein the dissolving device (20) is coupled to a water-drainage device (24), in which dissolving fluid is separated from the suspension, as a result of which the density of the suspension can be increased.

15. The collection vehicle according to one of the claims 10 to 14, wherein the dissolving device (20) is installed on a loading surface of the collecting vehicle (2) or is carried coupled on a trailer with the collecting vehicle (2).

## Revendications

1. Procédé de destruction de supports de données à des fins de rendre illisibles et de détruire sans accès des supports de données confidentiels (4) en papier, les supports de données confidentiels (4) étant collectés dans un lieu de production (A) dans des conteneurs de collecte de sécurité (1), enlevés au moyen d'un véhicule de collecte (2), et étant finalement acheminés à une installation de recyclage de papier (3),
**caractérisé en ce que**
les supports de données confidentiels (4) sont introduits après collecte dans des conteneurs de collecte de sécurité (1) par le biais d'un dispositif de chargement (21), lequel est couplé à un dispositif de désagrégation mobile (20) sécurisé et inaccessible aux personnes non autorisées dans le compartiment intérieur (201) du dispositif de dissolution mobile (20), lequel est relié au véhicule de collecte (2),
les supports de données (4) confidentiels y sont mélangés à un liquide de dissolution et
le mélange est mélangé par un dispositif de recirculation (202) en une suspension de documents défibrés et de liquide de dissolution,
un processus de dissolution hydromécanique ayant lieu dans le dispositif de dissolution mobile (20),
avant que la suspension soit acheminée à l'installation de recyclage de papier (3).

2. Procédé de destruction de supports de données selon la revendication 1, le dispositif de recirculation (202) étant constitué comme agitateur installé dans le compartiment intérieur (201) du dispositif de dissolution (20).

3. Procédé de destruction de supports de données selon l'une quelconque des revendications 1 à 2, le dispositif de recirculation (202) étant entraîné au moyen d'un système d'entraînement de dispositif de recirculation, lequel est couplé au système d'entraînement du véhicule de collecte (2).

4. Procédé de destruction de supports de données selon l'une quelconque des revendications précédentes, la suspension comportant un rapport de masse liquide de dissolution/supports de données (4) entre 85/15 à 98/2 dans le dispositif de dissolution (20).

5. Procédé de destruction de supports de données selon l'une quelconque des revendications précédentes, le dispositif de dissolution (20) étant installé sur la surface de chargement du véhicule de collecte (2).

6. Procédé de destruction de supports de données selon l'une quelconque des revendications 1 à 5, le dispositif de dissolution (20) étant transporté sur une remorque, couplée au véhicule de collecte (2).

7. Procédé de destruction de supports de données selon l'une quelconque des revendications précédentes, l'accès aux supports de données confidentiels (4) collectés dans le conteneur de sécurité (1) étant interdit par un mécanisme de fermeture actionné électromécaniquement.

8. Procédé de destruction de supports de données selon la revendication 1, une masse de liquide de dissolution, mesurée par un dispositif de pesée, étant ajoutée de façon pilotée avec un dispositif de dosage à la masse de supports de données (4) confidentiels introduits, la masse du liquide de dissolution correspondant au moins à un cinquième de la masse de supports de données (4).

9. Procédé de destruction de supports de données selon la revendication 1, après la destruction de supports de données, la densité de la suspension étant augmentée par traitement dans un dispositif de déshydratation (24) et la suspension déshydratée étant ensuite pompée dans un bac de stockage (25).

10. Véhicule de collecte (2) pour enlever et transporter des supports de données (4) confidentiels en papier collectés dans des conteneurs de collecte de sécurité (1) pour exécution d'un procédé de destruction de supports de données,
**caractérisé en ce que**
le véhicule de collecte (2) transporte de façon mobile un dispositif de dissolution (20), dans le compartiment intérieur (201)duquel une suspension de documents défibrés et de liquide de dissolution est obtenue par un processus de dissolution hydromécanique par mélange des supports de données (4) à un liquide de dissolution en utilisant un dispositif de recirculation (202), avant que la suspension puisse être acheminée à une installation de recyclage de papier (3),
le dispositif de dissolution (20) étant relié fonctionnellement à un dispositif de chargement (21) au moyen duquel les documents confidentiels (4) peuvent être introduits sans accès dans le compartiment intérieur (201) depuis le conteneur de sécurité (1).

11. Véhicule de collecte selon la revendication 10, dans lequel le dispositif de circulation (202) est conçu sous la forme d'un dispositif d'agitation, d'un rotor ou par rotation naturelle du dispositif de dissolution (20) autour d'un axe longitudinal.

12. Véhicule de collecte selon la revendication 10, le dispositif de dissolution (20) étant couplé à un dispositif de dosage de telle sorte qu'une quantité définie de liquide de dissolution peut être ajoutée au compartiment intérieur (201).

13. Véhicule de collecte selon la revendication 10, le dispositif de dissolution (20) étant couplé à un dispositif de chargement (21), lequel peut être relié de façon fonctionnelle à un volet d'éjection du conteneur de collecte de sécurité (1) de telle sorte que le contenu du conteneur de collecte de sécurité (1) peut être déposé sans accès dans le compartiment intérieur (201) du dispositif de dissolution (20).

14. Véhicule de collecte selon la revendication 10, le dispositif de dissolution (20) étant couplé à un dispositif de déshydratation (24) dans lequel le liquide de dissolution est séparé de la suspension, la densité de la suspension pouvant être de ce fait augmentée.

15. Véhicule de collecte selon l'une des revendications 10 à 14, dans lequel le dispositif de dissolution (20) est installé sur une surface de chargement du véhicule de collecte (2) ou est attelé sur une remorque avec le véhicule de collecte (2).
